# EUROPEAN PATENT APPLICATION

(11) **EP 3 231 990 A1**
(43) Date of publication of application: **18.10.2017**
(21) Application number: 17165021.1
(22) Date of filing: 05.04.2017
(51) Int. Cl.: F01D 5/00, F01D 15/06

(54) **APPARATUS FOR MACHINING COMPONENTS OF GAS TURBINE ENGINES**

(30) Priority: 13.04.2016 GB 201606386
(71) Applicant: Rolls-Royce plc, London SW1E 6AT (GB)
(72) Inventor: Kell, James, Derby, Derbyshire DE24 8BJ (GB); Rigg, Graeme, Derby, Derbyshire DE24 8BJ (GB); Danvers, Thomas, Derby, Derbyshire DE24 8BJ (GB); Nagy, Adam, Derby, Derbyshire DE24 8BJ (GB); Rabani, Amir, Derby, Derbyshire DE24 8BJ (GB)
(74) Representative: Rolls-Royce plc

(57) **Abstract**

Apparatus (10) for machining a component of a gas turbine engine, the apparatus comprising: a flexible pipe (12) having a first end (20) and a second end (22) and defining a conduit (24) for receiving a fluid; one or more first actuators (14) arranged to enable the first end of the flexible pipe to be re-positioned relative to the second end of the flexible pipe; a turbine (16) positioned adjacent to the first end of the flexible pipe, the turbine being arranged to receive fluid from the conduit of the flexible pipe; and a tool head (18) coupled to the first end of the flexible pipe, the tool head comprising: a fastener (30) arranged to fasten to a tool and to receive torque from the turbine.

## Description

### TECHNOLOGICAL FIELD

The present disclosure concerns apparatus for machining components of gas turbine engines.

### BACKGROUND

Gas turbine engines may require maintenance and repair during their operational life. For example, an aerofoil of a gas turbine engine (such as a compressor blade, a turbine blade, or a nozzle guide vane) may become damaged during operation and such damage may impair the performance of the gas turbine engine. It may be relatively time consuming and costly to disassemble the gas turbine engine to carry out the repair.

### BRIEF SUMMARY

According to various examples there is provided apparatus for machining a component of a gas turbine engine, the apparatus comprising: a flexible pipe having a first end and a second end and defining a conduit for receiving a fluid; one or more first actuators arranged to enable the first end of the flexible pipe to be re-positioned relative to the second end of the flexible pipe; a turbine positioned adjacent to the first end of the flexible pipe, the turbine being arranged to receive fluid from the conduit of the flexible pipe; and a tool head coupled to the first end of the flexible pipe, the tool head comprising: a fastener arranged to fasten to a tool and to receive torque from the turbine.

The turbine may be positioned within the tool head. Alternatively, the turbine may be positioned within the flexible pipe.

The one or more first actuators may include one or more cables extending along at least a portion of the flexible pipe. The one or more first actuators may include one or more inflatable members extending along at least a portion of the flexible pipe.

The tool head may include: a first tool head part coupled to the first end of the flexible pipe and having a first longitudinal axis; and a second tool head part coupled to the first tool head part and having a second longitudinal axis, the second tool head part comprising the fastener.

The first tool head part and the second tool head part may be fixed in position relative to one another. The first longitudinal axis and the second longitudinal axis may define a non-zero angle there between.

The tool head may further comprise a joint between the first tool head part and the second tool head part. The apparatus may further comprise one or more second actuators arranged to enable the second tool head part to be rotated relative to the first tool head part.

The fluid may be air. The apparatus may further comprise a source of compressed air coupled to the conduit of the flexible pipe.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION

Embodiments will now be described by way of example only, with reference to the Figures, in which:
Fig. 1 illustrates a schematic cross sectional side view of apparatus for machining a component of a gas turbine engine according to various examples;
Fig. 2 illustrates a schematic cross sectional front view of another apparatus for machining a component of a gas turbine engine according to various examples;
Fig. 3 illustrates a schematic cross sectional side view of a further apparatus for machining a component of a gas turbine engine according to various examples;
Fig. 4 illustrates a schematic side view of another apparatus for machining a component of a gas turbine engine according to various examples;
Fig. 5 illustrates a schematic cross sectional side view of a further apparatus for machining a component of a gas turbine engine according to various examples; and
Fig. 6 illustrates a schematic side view diagram of another apparatus for machining a component of a gas turbine engine according to various examples.

### DETAILED DESCRIPTION

In the following description, the terms 'connected' and 'coupled' mean operationally connected and coupled. It should be appreciated that there may be any number of intervening components between the mentioned features, including no intervening components.

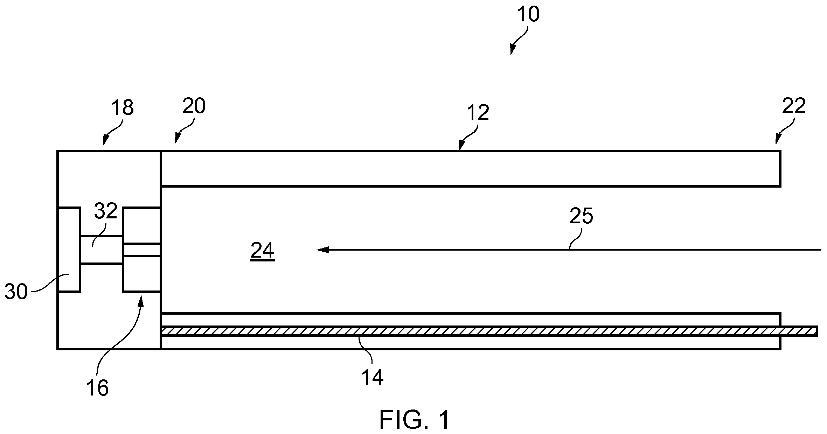

Fig. 1 illustrates a schematic cross sectional side view of an apparatus 10 including a flexible pipe 12, one or more first actuators 14, a turbine 16 and a tool head 18. The apparatus 10 is arranged to machine one or more components of a gas turbine engine. For example, the apparatus 10 may be inserted into the interior of a gas turbine engine via a borescope port to machine an aerofoil of the gas turbine engine (such as a compressor blade, a turbine blade, or a nozzle guide vane).

The flexible pipe 12 may comprise any suitable materials and have any suitable structure. For example, the flexible pipe 12 may comprise a flexible coiled material and an external sheath. The flexible pipe 12 may be braided to provide additional strength.

The flexible pipe 12 is elongate and has a first end 20 and a second opposite end 22. The flexible pipe 12 may have any cross sectional shape when viewed from the front. For example, the flexible pipe 12 may have a circular shape, an elliptical shape, or a polygonal shape when viewed from the front. The flexible pipe 12 defines a conduit 24 for receiving a fluid therein. The second end 22 may be coupled to a source of compressed fluid (compressed air for example) and fluid may flow from the second end 22 to the first end 20 (as indicated by arrow 25).

The one or more first actuators 14 are arranged to enable the first end 20 of the flexible pipe 12 to be re-positioned relative to the second end 22 of the flexible pipe 12. The one or more first actuators 14 may include any suitable mechanism or device for controlling the shape of the flexible pipe 12 and may be positioned within the flexible pipe 12 or outside of the flexible pipe 12.

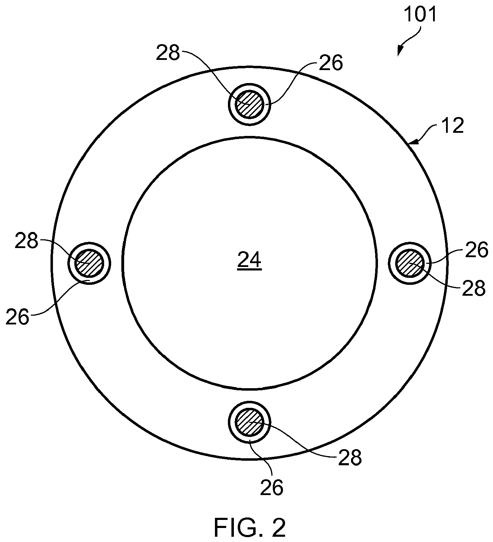

In various examples, the one or more first actuators 14 may include one or more cables that extend along at least a portion of the flexible pipe 12 and that may be operated (pulled for example) to re-position the first end 20 of the flexible pipe 12. In more detail, the one or more cables may be positioned and moveable within tubular cavities within the flexible pipe 12 and may be connected to the flexible pipe 12 at (or close to) the first end 20, or may be connected to the tool head 18. By way of an example, fig. 2 illustrates an apparatus 101 where the flexible pipe 12 defines four tubular cavities 26, each having a cable 28 therein so that the flexible pipe 12 has at least two degrees of freedom.

Additionally or alternatively, the one or more first actuators 14 may include one or more inflatable members that extend along at least a portion of the flexible pipe 12 and that may be inflated (with air for example) to re-position the first end 20 of the flexible pipe 12. The one or more inflatable members may be positioned within tubular cavities within the flexible pipe 12.

As used herein, the term "flexible" means that the flexible pipe 12 has a stiffness along the length of the flexible pipe 12 that enables the flexible pipe 12 to change shape when a force is applied to the flexible pipe 12 by the one or more first actuators 14. In particular, the first end 20 of the flexible pipe 12 may be moved through (and no further than) an angle relative to the configuration illustrated in Fig. 1. In various different embodiments, the angle may have any value between ten degrees and three hundred and sixty degrees. The flexible pipe 12 may be relatively rigid radially and may consequently not buckle and form kinks when reconfigured by the one or more actuators 14.

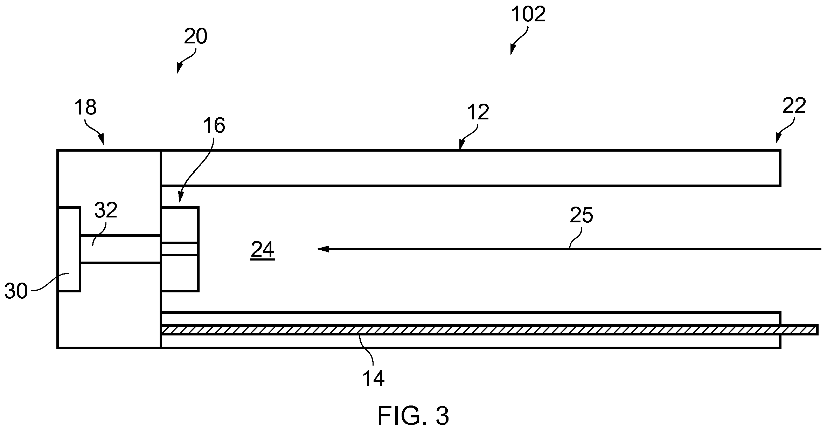

The turbine 16 is positioned adjacent to the first end 20 of the flexible pipe 12 and is arranged to receive fluid from the conduit 24 of the flexible pipe 12. The turbine 16 may be positioned within the tool head 18 (as illustrated in Fig. 1) or may be positioned within the flexible pipe 12 (as illustrated in fig. 3 where the apparatus 102 includes a turbine 16 located within the flexible pipe 12 at the first end 20). The turbine 16 is arranged to rotate when fluid flows through the turbine 16 (that is, the turbine 16 is driven by the flow of fluid through the turbine 16).

The tool head 18 is coupled to the first end 20 of the flexible pipe 12 and includes a fastener 30 that is arranged to fasten to a tool (a blending tool, a milling tool, or a drill bit for example). The fastener 30 may have any suitable structure for fastening to a tool and may comprise a socket for receiving a tool therein, a chuck for clamping a tool, or a protrusion for being received within a socket of a tool. The fastener 30 is arranged to receive torque from the turbine 16 via a shaft 32 and may rotate at a relatively high angular speed (up to 400,000 revolutions per minute for example).

The apparatus 10, 101, 102 may provide several advantages. First, the apparatus 10, 101, 102 may be inserted into the interior of a gas turbine engine via a borescope port to machine a component of the gas turbine engine. The tool head 18 of the apparatus 10, 101, 102 may be advantageously re-positioned within the gas turbine engine after the apparatus 10, 101, 102 has been inserted into the gas turbine engine through operation of the one or more first actuators 14. This may enable an operator (which may be a human or a robot) to machine a selected part of a component which is at a relatively inaccessible location within a gas turbine engine.

Second, the fastener 30 may have a relatively high angular speed since the fastener 30 is driven by the turbine 16. This may advantageously result in the apparatus 10, 101, 102 having a relatively high machining speed and may thus reduce the time required to machine a component. The high angular speed of the fastener 30 may also result in the apparatus 10, 101, 102 requiring a relatively low force to perform a machining operation.

Third, the angular speed of the fastener 30 may be relatively unaffected by the shape of the flexible pipe 12 since the conduit 24 remains open irrespective of the configuration of the flexible pipe 12. This may provide the apparatus 10, 101, 102 with a relatively high machining speed even when the flexible pipe 12 is deflected through a relatively large angle (such as ninety degrees from the configuration illustrated in Fig. 1 for example).

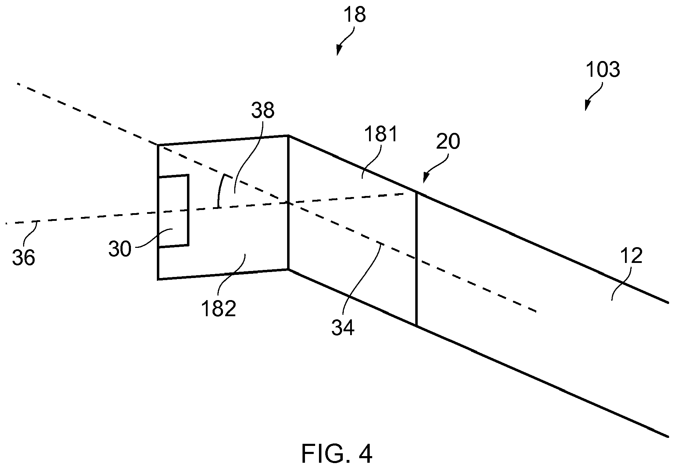

Fig. 4 illustrates a schematic side view of another apparatus 103 for machining a component of a gas turbine engine according to various examples. The apparatus 103 is similar to the apparatus 10, 101, 102 and where the features are similar, the same reference numerals are used. It should be appreciated that various features of the apparatus 103 (such as the one or more actuators) are not illustrated in Fig. 4 to maintain the clarity of the figure.

The apparatus 103 differs from the apparatus 10, 101, 102 in that the tool head 18 includes a first tool head part 181 and a second tool head part 182. The first tool head part 181 is coupled to the first end 20 of the flexible pipe 12 and has a first longitudinal axis 34. The second tool head part 182 is coupled to the first tool head part 181 and has a second longitudinal axis 36. The second tool head part 182 comprises the fastener 30 and may additionally comprise the turbine 16 and the shaft 32.

The first tool head part 181 and the second tool head part 182 are fixed in position relative to one another. For example, the first tool head part 181 and the second tool head part 182 may be welded together. By way of another example, the first tool head part 181 and the second tool head part 182 may be coupled to one another via an adhesive. The first longitudinal axis 34 and the second longitudinal axis 36 define a non-zero angle 38 there between. For example, the angle 38 may be any angle between ten degrees and ninety degrees.

The apparatus 103 may provide a further advantage in that the tool head 18 may have an angle 38 that makes it more suitable for machining a particular component of a gas turbine engine. In particular, the angle of the tool head 18 may enable access to a particular part of a component or may enable the apparatus 103 to provide a greater force to a component during machining.

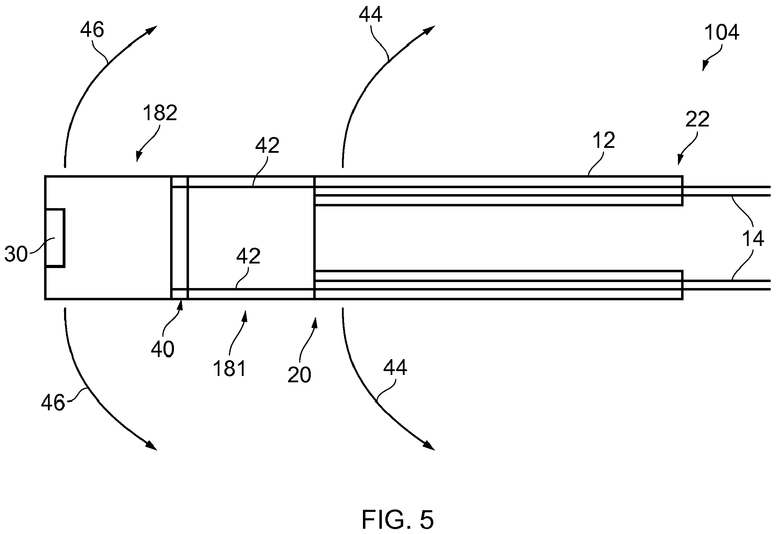

Fig. 5 illustrates a schematic cross sectional side view of a further apparatus 104 for machining a component of a gas turbine engine according to various examples. The apparatus 104 is similar to the apparatus 103 and where the features are similar, the same reference numerals are used.

The apparatus 104 differs from the apparatus 103 in that the first tool head part 181 and the second tool head part 182 are coupled to one another via a joint 40, and the second tool head part 182 may move relative to the first tool head part 181 (in other words, the tool head 18 is articulated). The joint 40 may be any suitable connection that allows movement between the first tool head part 181 and the second tool head part 182 in one or more degrees of freedom. The joint 40 may include, for example, a pivot joint or a hinge joint.

The apparatus 104 also differs from the apparatus 103 in that the apparatus 104 further comprises one or more second actuators 42 that are arranged to enable the second tool head part 182 to be rotated relative to the first tool head part 181. The one or more second actuators 42 may comprise any suitable mechanism and may comprise, for example, one or more cables and/or one or more inflatable members.

In operation, the apparatus 104 may be inserted into the interior of a gas turbine engine via a borescope port. The one or more first actuators 14 may be operated to re-position the first end 20 of the flexible pipe 12 as indicated by arrows 44. Additionally, the one or more second actuators 42 may be operated to rotate the second tool head part 182 relative to the first tool head part 181 as indicated by arrows 46.

The apparatus 104 may provide a further advantage in that articulation of the tool head 18 may enable the apparatus 104 to be used for a greater number of repair and maintenance operations within a gas turbine engine. In particular, the articulation of the tool head 18 may enable the second tool head part 182 to machine locations within a gas turbine engine that would be inaccessible to the apparatus 10, 101, 102, 103.

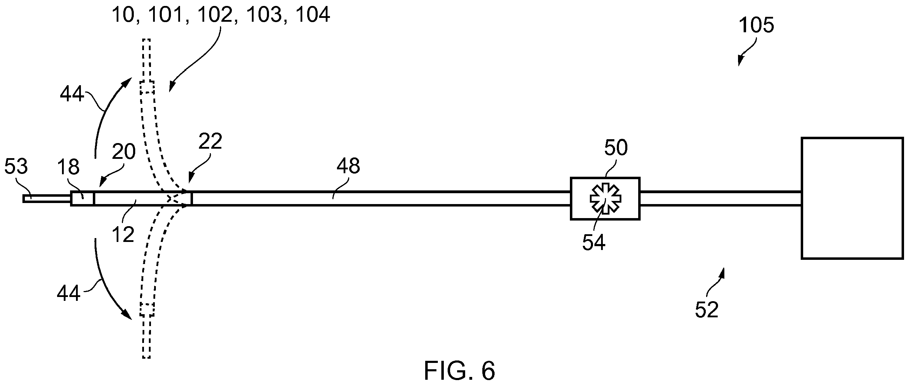

Fig. 6 illustrates a schematic side view diagram of another apparatus 105 for machining a component of a gas turbine engine according to various examples. The apparatus 105 includes one of the apparatus 10, 101, 102, 103, 104 and additionally comprises a further flexible pipe 48, a controller 50, a source of compressed fluid 52, and a tool 53.

As represented by the dotted lines, the first end 20 of the flexible pipe 12 may be moved through an angle of one hundred and eighty degrees relative to the second end 22 of the flexible pipe 12. It should be appreciated that the flexible pipe 12 is not limited to this range of movement, and that in other examples, the flexible pipe 12 may move through an angle greater than, or less than, one hundred and eighty degrees.

The further flexible pipe 48 is connected between the flexible pipe 12 and the controller 50. The further flexible pipe 48 may comprise the same material and have the same internal structure as the flexible pipe 12, or may comprise a different material and/or different internal structure.

The controller 50 is arranged to control the operation of the one or more first actuators 14 (and the one or more second actuators 42 where the apparatus 105 includes the apparatus 104). Where the apparatus 105 is a hand operated tool, the controller 50 may include one or more handles 54 for controlling the first and second actuators 14, 42. Where the apparatus 105 is a robotic machining tool, the controller 50 may include one or more servomotors for controlling the operation of the first and second actuators 14, 42.

The source of compressed fluid 52 is arranged to provide fluid to the flexible pipe 12 via the controller 50 and the further flexible pipe 48. In various examples, the source of compressed fluid 52 is a source of compressed air.

As mentioned in the preceding paragraphs, the tool 53 may be any suitable tool for machining a component of a gas turbine engine. For example, the tool 53 may be a blending tool, a milling tool, or a drill bit.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. Apparatus for machining a component of a gas turbine engine, the apparatus comprising:
a flexible pipe having a first end and a second end and defining a conduit for receiving a fluid;
one or more first actuators arranged to enable the first end of the flexible pipe to be re-positioned relative to the second end of the flexible pipe;
a turbine positioned adjacent to the first end of the flexible pipe, the turbine being arranged to receive fluid from the conduit of the flexible pipe; and
a tool head coupled to the first end of the flexible pipe, the tool head comprising: a fastener arranged to fasten to a tool and to receive torque from the turbine.

2. Apparatus as claimed in claim 1, wherein the turbine is positioned within the tool head.

3. Apparatus as claimed in claim 1, wherein the turbine is positioned within the flexible pipe.

4. Apparatus as claimed in any of the preceding claims, wherein the one or more first actuators includes one or more cables extending along at least a portion of the flexible pipe.

5. Apparatus as claimed in any of the preceding claims, wherein the one or more first actuators include one or more inflatable members extending along at least a portion of the flexible pipe.

6. Apparatus as claimed in any of the preceding claims, wherein the tool head includes: a first tool head part coupled to the first end of the flexible pipe and having a first longitudinal axis; and a second tool head part coupled to the first tool head part and having a second longitudinal axis, the second tool head part comprising the fastener.

7. Apparatus as claimed in claim 6, wherein the first tool head part and the second tool head part are fixed in position relative to one another, the first longitudinal axis and the second longitudinal axis defining a non-zero angle there between.

8. Apparatus as claimed in claim 6, wherein the tool head further comprises a joint between the first tool head part and the second tool head part, the apparatus further comprising one or more second actuators arranged to enable the second tool head part to be rotated relative to the first tool head part.

9. Apparatus as claimed in any of the preceding claims, wherein the fluid is air, and the apparatus further comprises a source of compressed air coupled to the conduit of the flexible pipe.
